# EUROPÄISCHE PATENTSCHRIFT

(11) **EP 1 218 100 B1**
(45) Veröffentlichungstag und Bekanntmachung des Hinweises auf die Patenterteilung: **22.12.2004**
(21) Anmeldenummer: 00960535.3
(22) Anmeldetag: 28.08.2000
(51) Int. Cl.: B01J 20/26, B01J 20/28, G01N 30/48, B01D 15/08, B29C 33/52

(54) **PORÖSE ORGANISCHE POLYMERFORMKÖRPER**
POROUS ORGANIC POLYMER SHAPED BODIES
CORPS MOULES POLYMERES ORGANIQUES POREUX

(30) Priorität: 29.09.1999 DE 19946674
(43) Veröffentlichungstag der Anmeldung: 03.07.2002
(73) Patentinhaber: MERCK PATENT GmbH, 64271 Darmstadt (DE)
(72) Erfinder: MÜLLER, Egbert, 64291 Darmstadt (DE); SCHÄFER, Christian, D-64331 Weiterstadt (DE); LUBDA, Dieter, 64625 Bensheim (DE)
(86) Internationale Anmeldenummer: PCT/EP2000/008373
(87) Internationale Veröffentlichungsnummer: WO 2001/023083

(56) Entgegenhaltungen:
- EP-A- 0 089 425
- EP-A- 0 366 252
- EP-A- 0 797 096
- WO-A-95/03256
- WO-A-98/03261
- US-A- 3 222 444
- US-A- 5 288 763
- SVEC F ET AL: "MOLDED RIGID MONOLITHIC POROUS POLYMERS: AN INEXPENSIVE, EFFICIENT,AND VERSATILE ALTERNATIVE TO BEADS FOR THE DESIGN OF MATERIAL FOR NUMEROUS APPLICATIONS" INDUSTRIAL & ENGINEERING CHEMISTRY RESEARCH,US,AMERICAN CHEMICAL SOCIETY. WASHINGTON, Bd. 38, Nr. 1, 1999, Seiten 34-48, XP000788228 ISSN: 0888-5885

## Beschreibung

Die Erfindung betrifft poröse organische Polymerformkörper, die aufgrund ihrer Eigenschaften besonders als chromatographische Trennmaterialien geeignet sind, und ihre Herstellung mittels eines Imprintverfahrens.

Polymere Formkörper finden vielfältige Anwendung als chromatographische Trennmaterialien. Bekannt ist der Einsatz von organischen polymeren Membranen für die Separation von makromolekularen Stoffen (EP 0 320 023) oder die Verwendung von porösen Kieselgel-Formkörpern statt der üblichen partikulären Sorbentien für chromatographische Trennungen (WO 95/03256). Kieselgel-Formkörper können mit einer definierten engen Porenverteilung hergestellt werden. Durch die Kombination von Meso- und Makroporen können auch bei hohem Fluß gute Trennleistungen erzielt werden. Auf diese Weise bieten Formkörper vorteilhaftere Eigenschaften als partikuläre Trägermaterialien.

Nachteil der Kieselgel-Formkörper ist jedoch ihre unzureichende Stabilität in wässrigen Laufmitteln, insbesondere bei pH-Werten > 7. Aus diesem Grund können sie nicht für alle chromatographischen Trennverfahren, wie beispielsweise Ionenaustauschchromatographie, eingesetzt werden. Weiterhin bestehen Einschränkung bei der Reinigung und der Anti-Fowling-Behandlung von Sorbentien auf Kieselgel-Basis.

Formkörper aus organischen Materialien dagegen würden eine geeignete Stabilität aufweisen, können aber bislang nicht in der gileichen Qualität produziert werden wie anorganische Formkörper, die nach dem Sol - Gel Verfahren (WO 95/03256) hergestellt werden. Membranen aus organischen Polymeren können durch Massepolymerisation in Gegenwart eines Porogens hergestellt werden (EP 320 023). Diese Polymermembranen werden vorzugsweise zur Separation von makromolekularen Substanzen wie Biopolymeren verwendet, da für derartige Anwendungen makroporöse Materialien verwendet werden können. Mesoporöse organische Polymere mit einer engen Porenverteilung zur Auftrennung kleinerer Moleküle können jedoch nicht in der notwendigen Qualität hergestellt werden.

In EP 0 366 252 wird die Herstellung von porösen organischen Trägermaterialien durch einen polymeren Abdruck von Kieselgelteilchen beschrieben. Das Porensystem der Kieselgelteilchen wird durch Suspensionspolymerisation mit Polymer gefüllt durch Extraktion von Monomer und Initiator aus dem Suspensionsmedium in das Porensystem. Nachteilig bei diesem Verfahren ist die notwendige Abstimmung der Polarität von Suspensionsmedium, Monomeren und Matrize zur Erzielung der erforderlichen Phasentrennung zwischen flüssigem Suspensionsmedium und Monomer / Iniator. Zudem bietet das Verfahren lediglich die Möglichkeit, partikuläre Trägermaterialien herzustellen.

Aufgabe der vorliegenden Erfindung war es daher, einen einfachen Herstellungsprozeß zu finden, welcher es ermöglicht, Polymerformkörper mit einer großen spezifischen Oberfläche und definierter Porenstruktur herzustellen. Derartige Materialien sind besonders geeignet für die chromatographische Auftrennung von Komponenten mit kleinen Molmassen.

Es wurde gefunden, daß durch Massepolymerisation von Monomeren in einem Kieselgelformkörper und anschließendem Herauslösen des Kieselgels organische Polymerformkörper für die Chromatographie hergestellt werden können. Diese Polymerformkörper zeigen Trennleistungen, die denen der Kieselgelformkörper äquivalent sind.

Gegenstand der vorliegenden Erfindung ist demnach ein Verfahren zur Herstellung von polymeren organischen Formkörpern, gekennzeichnet durch folgende Verfahrensschritte:
a) Bereitstellen eines Kieselformkörpers, der Makro- und Mesoporen in den Wänden der Makroporen aufweist, als Matrize;
b) Ausgießen der Hohlräume des Formkörpers mit einer Monomerlösung;
c) Polymerisierung der Monomerlösung;
d) Auswaschen und Herauslösen des Matrizenformkörpers.

In einer bevorzugten Ausführungsform wird ein Matrizenformkörper verwendet, der mit Templat-Molekülen modifiziert ist.

In einer weiteren bevorzugten Ausführungsform wird zum Auswaschen des Matrizenformkörpers wässrige Flußsäure verwendet.

Gegenstand der vorliegenden Erfindung sind auch polymere organische Formkörper, erhältlich durch
a) Bereitstellen eines Kieselformkörpers, der Makro- und Mesoporen in den Wänden der Makroporen aufweist, als Matrize;
b) Ausgießen der Hohlräume des Formkörpers mit einer Monomerlösung;
c) Polymerisierung der Monomerlösung;
d) Auswaschen und Herauslösen des Matrizenformkörpers.

In einer bevorzugten Ausführungsform weisen die Oberflächen der Formkörper Separationseffektoren auf.

Gegenstand der vorliegenden Erfindung ist auch eine chromatographische Trennsäule, die einen erfindungsgemäßen Formkörper enthält.

Gegenstand der vorliegenden Erfindung ist auch die Verwendung eines erfindungsgemäßen Formkörpers bei der chromatographischen Trennung mindestens zweier Stoffe.

Organische polymere Formkörper im Sinne der vorliegenden Erfindung sind Formkörper jeder Form, beispielsweise Membranen oder flache oder säulenförmige Formkörper. Flache Formkörper haben ihre größte Ausdehnung quer zur Durchflußrichtung des Elutionsmittels. Besonders bevorzugt werden Formkörper, wie säulenförmige Formkörper, eingesetzt, die eine gleich lange oder längere Ausdehnung entlang der Achse haben, die von den Elutionsmitteln durchströmt wird. Die Größe und Dimension der Formkörper entspricht den in der zum Einsatz in der Chromatographie üblichen Dimensionen. Flache Formkörper haben typischerweise eine Dicke zwischen 0,2 und 20 µm, säulenförmige Formkörper haben typischerweise einen Durchmesser zwischen 0,1 cm und 5 cm und eine Länge (längste Ausdehnung) zwischen 1 und 30 cm. Für präparative Trennungen können die angegebenen Dimensionen entsprechend der Dimensionen bekannter Säulendimensionen überschritten werden. Für miniaturisierte Anwendungen können die angegebenen Dimensionen bis in den Bereich von Kapillaren unterschritten werden.

Organische polymere Formkörper im Sinne der vorliegenden Erfindung sind auch Formkörper, die für eine Radialsäule verwendet werden können. In diesem Fall wird der Formkörper nicht entlang seiner Längsachse durchströmt. Vielmehr weist er entlang der Längsachse eine Bohrung auf, durch die das Elutionsmittel zunächst in den Formkörper eintritt und anschließend radial an den Rand hin austritt. Die Tiefe und der Durchmesser der Bohrung richten sich nach den Dimensionen des Formkörpers und haben die für derartige Anwendungen üblichen Maße.

Als Matrizenformkörper für das erfindungsgemäße Verfahren werden typischerweise entsprechend dimensionierte poröse Formkörper verwendet, deren Porensystem insbesondere aus Makroporen gebildet wird. Bevorzugterweise besitzen die Formkörper zusätzlich auch Mesoporen in den Wänden der Makroporen. Die untereinander verbundenen Makroporen besitzen typischerweise einen Durchmesser, der einen Medianwert größer als 0,1 µm aufweist. Der Durchmesser der Mesoporen weist im allgemeinen einen Medianwert zwischen 2 und 100 nm auf. Durch die Art der Porosität bzw. der spezifischen Oberfläche des Matrizenformkörpers kann die Porosität und spezifische Oberfläche des einpolymerisierten Formkörpers beeinflußt werden. Die entstehenden erfindungsgemäßen Formkörper können demnach Makroporen und bevorzugt auch Mesoporen der gleichen Größenordungen aufweisen, wie sie für die Matrizenformkörper aufgeführt sind.

Statt eines porösen Formkörpers kann als Matrizenformkörper auch eine Säule oder eine entsprechende Halterung verwendet werden, die mit porösen Partikeln gefüllt ist. In diesem Fall bilden die Partikelzwischenräume üblicherweise Makroporen.

Um nach erfolgter Polymerisation den Matrizenformkörper entfernen zu können, muß dieser aufgelöst und ausgewaschen werden, ohne das entstandene organische Polymer zu zerstören. Deshalb werden Matrizenformkörper aus Kieselgel, verwendet. Beispielsweise können dies monolithische Formkörper sein, wie sie in WO 94/19 687 oder WO 95/03 256 beschrieben werden. Sie können calciniert oder uncalciniert eingesetzt werden, je nach der gewünschten Porosität des herzustellenden organischen Polymers.

Matrizenformkörper aus Kieselgel können mit wässrigen Basen oder, besonders bevorzugt, mit wässriger Flußsäure ausgewaschen werden.

Das erfindungsgemäße Verfahren ermöglicht die Herstellung verschiedenster organischer polymerer Formkörper. Die Formkörper können z.B. durch radikalische, ionische oder thermische Polymerisation erzeugt werden. Es kann sich beispielsweise um Poly(rneth)acrylsäurederivate, Polystyrolderivate, Polyester, Polyamide oder Polyethylene handeln. Die entsprechend einzusetzenden Monomeren sind dem Fachmann auf dem Gebiet der organischen Polymere bekannt. Beispielsweise sind dies monoethylenisch oder polyethylenisch ungesättigte Monomere, wie Vinyl-Monomere, vinylaromatische und vinylaliphatische Monomeren, z.B. Styrol und substituierte Styrole, Vinylacetate oder Vinylpropionate, acrylische Monomere, wie Methacrylate und andere Alkylacrylate, Ethoxymethylacrylat und höhere Analoga und die entsprechenden Methacylsäureester oder deren Arnide, wie Acrylamid oder Acrylnitril. Weitere monoethylenisch und polyethylenisch ungesättigten Monomere finden sich beispielsweise in EP 0 366 252 oder US 5,858,296.

Der Fachmann ist in der Lage, die verschiedenen Monomeren entsprechend zu kombinieren, gegebenenfalls einen geeigneten Radikalstarter oder Initiator zu wählen und so eine Monomerlösung zusammenzustellen, mit der der Matrizenformkörper aufgefüllt wird. Die Polymerisationsdauer und -temperatur wird nach üblichen Regeln auf die jeweilige Monomerlösung abgestimmt.

Nach Beendigung des Polymerisationsschritts wird der entstandene solide Formkörper, der aus der Kieselgel-Matrize und dem abgeformten organischen Polymer besteht, entnommen und das Material des Matrizenformkörpers ausgewaschen und herausgelöst. Dazu wird der Formkörper in einer Waschlösung, optional unter Erhitzen, gelagert oder bevorzugt geschwenkt. Eine Behandlung mit wässriger Flußsäure zur Entfernung von Kieselgel dauert typischerweise 48 h.

Nach weiteren Waschschritten zur Entfernung der aggressiven Waschlösung und letzter Partikel erhält man den porösen organischen polymeren Formkörper als Abdruck bzw. Gegenstück zu dem eingesetzten Matrizenformkörper.

Falls die entstandenen Formkörper bereits die geeigneten Funktionalitäten aufweisen, können sie direkt für chromatographische Trennungen eingesetzt werden. Beispielsweise kann ein Polymer aus Polystyrol oder Derivaten davon direkt für Reversed Phase Trennungen verwendet werden. Dazu werden die Formkörper mit entsprechenden Anschlußstücken versehen, mit einer Ummantelung umgeben und in eine chromatographische Trennsäule integriert. Geeignete Halterungen und Ummantelungen sind bereits für anorganische monolithische Sorbentien bekannt (z.B. WO 98/59238 und die unveröffentlichte DE 99 32 318) und können auf die erfindungsgemäßen Formkörper übertragen werden. Besonders bei einer Ummantelung mit Kunststoffen, wie z.B. PEEK oder faserverstärktem PEEK, können die erfindungsgemäßen organischen Formkörper zumeist effektiver und dichter ummantelt werden als die entsprechenden anorganischen Formkörper, da sie eine stärkere Bindung zu der Kunststoff-Ummantelung eingehen können.

In Abhängigkeit von den Trenneigenschaften, die der erfindungsgemäße Formkörper aufweisen soll, können jedoch zunächst weitere Modifikationen notwendig sein. Soll er beispielsweise für die Affinitäts- oder lonentausch-chromatographie eingesetzt werden, muß die Oberfläche mit entsprechenden Separationseffektoren belegt sein. In manchen Fällen können geeignete Substanzen bereits der Monomerlösung zugesetzt werden und so direkt in das Polymer eingeführt werden. Bevorzugterweise werden jedoch entsprechend bekannter Verfahren während der Polymerisation zunächst Funktionalitäten eingeführt, die anschließend mit Separationseffektoren umgesetzt werden können. Ebenso können weitere Modifikationen über Block- oder Pfropfpolymerisationen auf den polymeren Formkörpern eingeführt werden. Separationseffektoren und Monomere, die neben einer polymerisierbaren Doppelbindung noch weitere Funktionalitäten, wie z.B. Oxiranringe, enthalten, sind dem Fachmann bekannt. Beispiele finden sich in WO 96/2216, WO 96/22316 oder WO 95/10354.

Genauso können geeignete Funktionalitäten der erfindungsgemäßen Formkörper zur Anbindung bzw. Immobilisierung von Biomolekülen, wie beispielsweise Enzymen verwendet werden. Dazu sind besonders makroporöse Formkörper geeignet. Daher fallen Biomoleküle wie z.B. Enzyme erfindungsgemäß auch unter den Begriff Separationseffektoren.

Durch das erfindungsgemäße Verfahren können weiterhin Formkörper mit besonderen Trenneigenschaften hergestellt werden. Wie beim "Molecular Imprinting" können Templat-Moleküle an die Oberfläche des, in diesem Falle porösen, Matrizenformkörpers gebunden werden. Anschließend werden die Zwischenräume oder Poren mit Monomerlösung ausgefüllt und auspolymerisiert. Während der Polymerisation bilden sich Kavitäten aus, die die Templat-Moleküle umschließen. Dann wird der Matrizenformkörper und die daran gebundenen Templatmoleküle ausgewaschen. Im Gegensatz zu den bekannten Verfahren des Molecular Imprinting bietet das erfindungsgemäße Verfahren den Vorteil, daß durch die Bindung an den Matrizenformkörper die Templatmoleküle eine definiert ausgerichtete Position einnehmen. Auf diese Weise entstehen definiertere Kavitäten, die bei der chromatographischen Trennung eindeutigere und stärkere Wechselwirkungen eingehen können. Ein weiterer großen Vorteil des erfindungsgemäßen Verfahrens ist, daß nach der Polymerisation alle Templatmoleküle ausgewaschen werden können.

In herkömmlichen Verfahren wird ein Teil der Templatmoleküle nach der Polymerisation vollständig von dem Polymer umgeben und kann gar nicht oder nur sehr langsam aus dem Polymer entfernt werden. Da auch bei der späteren Verwendung der Polymere zur chromatographischen Trennung noch Templatmoleküle aus dem Polymer freigesetzt werden können und die Analyse verfälschen, ist die Verwendung derartiger Materialien zumeist auf eine Aufreinigung oder qualitative Analyse beschränkt. Eine Spurenanalyse ist kaum möglich.

Erfindungsgemäß hergestellte Polymere zeigen dieses Ausbluten nicht. Grund dafür ist die bevorzugt kovalente Bindung der Templat-Moleküle an den Matrizenformkörper. Auf diese Weise werden sie niemals vollständig von dem einpolymerisierten Formkörper umgeben und festgehalten, sondern werden durch das Auswaschen des Matrizenformkörpers zusammen mit diesem vollständig entfernt.

Zudem ist zur Herstellung eines Imprintpolymers nach dem Stand der Technik eine große Menge an gereinigtem Templat notwendig, die nur schwer wieder zurückgewonnen werden kann. Bei der erfindungsgemäßen Verfahren dagegen wird das Templat zunächst an den Matrizen-Formkörper gebunden. Überschüssige Templat-Moleküle können abgewaschen und aufgefangen werden. Erst in einem zweiten Schritt wird die Monomerlösung zugegeben und polymerisiert. Die nach dem erfindungsgemäßen Verfahren unter Verwendung eines Templats hergestellten Polymerformkörper können sowohl als Formkörper eingesetzt werden oder auch für bestimmte Anwendungen nachträglich zu Partikeln zerkleinert werden.

Somit bietet das erfindungsgemäße Verfahren die Möglichkeit, organische polymere Formkörper mit definierter Porosität herzustellen. Die Poren können durch den Matrizenformkörper selbst oder durch eine Modifikation des Matrizenformkörpers mit Templatmolekülen definiert werden. Die erfindungsgemäßen Materialien ermöglichen im Vergleich zu partikulären Sorbentien zumindest gleichwertige Trennleistungen bei höherem Fluß. Sowohl die Oberfläche des Matrizenformkörpers als auch die Oberfläche des erfindungsgemäßen Formkörpers kann modifiziert werden, so daß eine Vielzahl von Möglichkeiten besteht, die Formkörper ideal an das jeweilige Trennproblem anzupassen.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### 1. Herstellung eines Polymerformkörpers mit einem Kieselgel-Matrizenformkörper

### Material :

4 unkalzinierte Kieselgel - Matrizenformkörper (Länge 11 cm, ⌀ 4 mm) Monomerlösung bestehend aus : 35 ml Styrol, 35 ml Divinylbenzol (entstabilisiert mit NaOH und getrocknet mit Na₂SO₄) und 0,7 g Azoisobuttersäurenitril

### Geräte :

100 ml Einhalskolben,
2 Tropftrichter mit Druckausgleich
Trockenofen mit Drehvorrichtung

### Durchführung :

Die Kieselgel - Matrizenformkörper werden in einen querliegenden 250 ml Tropftrichter vorgelegt und 10 min evakuiert. Unter Vakuum wird die Monomerlösung innerhalb von 2 min zugetropft. Nach 10 min, wenn keine Blasenbildung mehr erkennbar ist, wird die überstehende Polymerlösung abgegossen und die Formkörper in den Drehofen gegeben, wo bei 70°C 20 h polymerisiert wird. Nach dem Abkühlen werden die Teile in 50 % - ige wässrige (v:v) Flußsäure gegeben und es wird 2 Tage geschüttelt. Anschließend wird mit Wasser und 0,5 M Phosphatpuiffer (pH 5,5) gewaschen.
Die entstandenen organischen Formkörper werden dann jeweils 6 Stunden mit Toluol und Acetonitril extrahiert. Anschließend werden die Formkörper in einen Schrumpfschlauch gesteckt und mit Epoxyharz vergossen, wobei HPLC - Connectoren mit eingegossen werden.

Daten der Polymerformkörper :
mittlere Porengröße : 12, 2 nm
Porenvolumen : 0,16 cm³
mittlere spezifische Oberfläche : 50 m² (bestimmt nach BET)

### Chromatographischer Test:

Es wurde die Bodenzahl mit Toluol bestimmt :
Elutionsmittel : Acetonitril- Wasser, 60 : 40
Wellenlänge : 254 nm
Bodenzahl : 9935 Böden pro m

### 2. Herstellung eines Polymerformkörpers als Abdruck einer mit Kieselgelteilchen gepackten Säule

### Durchführung :

Monospher Kieselgelpartikel (Durchmesser 2*µ*m) wurden in eine Superformancesäule 50 - 10 gepackt.
Es wurden jeweils 10 ml Styrol, 10 ml Divinylbenzol und 0,2 g AIBN eingefüllt und bei 70°C zur Reaktion gebracht. Nach der Reaktion wird das Produkt entnommen und in 50 % - ige (v:v) HF Lösung gegeben.
Anschließend wird mit Wasser, Phosphatpuffer (pH 5,5) (Jeweils 1 Stunde und 50 ml) , Methanol, Aceton und Acetonitril (100 ml jeweils 10 h) gewaschen.

## Patentansprüche

1. Verfahren zur Herstellung von polymeren organischen Formkörpern, **gekennzeichnet durch** folgende Verfahrensschritte:
a) Bereitstellen eines Kieselgelformkörpers, der Makro- und Mesoporen in den Wänden der Makroporen aufweist, als Matrize
b) Ausgießen der Hohlräume des Formkörpers mit einer Monomerlösung
c) Polymerisierung der Monomerlösung
d) Auswaschen und Herauslösen des Matrizenformkörpers

2. Verfahren nach Anspruch 1, **dadurch gekennzeichnet, daß** ein Matrizenformkörper verwendet wird, der mit Templat-Molekülen modifiziert ist.

3. Verfahren nach einem der Ansprüche 1 oder 2, **dadurch gekennzeichnet, daß** zum Auswaschen des Matrizenformkörpers wässrige Flußsäure verwendet wird.

4. Polymerer organischer Formkörper herstellbar nach dem Verfahren entsprechend einem der Ansprüche 1 bis 3.

5. Polymerer organische Formkörper nach Anspruch 4, **dadurch gekennzeichnet, daß** die Oberfläche des Formkörpers Separationseffektoren aufweist.

6. Chromatographische Trennsäule, enthaltend einen Formkörper nach einem der Ansprüche 4 oder 5.

7. Verwendung eines Formkörpers nach einem der Ansprüche 4 oder 5 bei der chromatographischen Trennung mindestens zweier Stoffe.

## Claims

1. Process for the production of polymeric organic mouldings, **characterised by** the following process steps:
a) provision of a silica-gel moulding having macropores and mesopores in the walls of the macropores, as matrix
b) filling of the cavities of the moulding with a monomer solution
c) polymerisation of the monomer solution
d) washing out and dissolution of the matrix moulding

2. Process according to Claim 1, **characterised in that** use is made of a matrix moulding which has been modified with template molecules.

3. Process according to one of Claims 1 or 2, **characterised in that** aqueous hydrofluoric acid is used for washing out the matrix moulding.

4. Polymeric organic moulding which can be produced by the process corresponding to one of Claims 1 to 3.

5. Polymeric organic moulding according to Claim 4, **characterised in that** the surface of the moulding has separation effectors.

6. Chromatographic separating column containing a moulding according to one of Claims 4 or 5.

7. Use of a moulding according to one of Claims 4 or 5 in the chromatographic separation of at least two substances.

## Revendications

1. Procédé pour la production de moulages organiques polymériques, **caractérisé par** les étapes de procédé suivantes:
a) fourniture d'un moulage en gel de silice présentant des macropores et des mésopores dans les parois des macropores, en tant que matrice
b) remplissage des cavités du moulage avec une solution de monomère
c) polymérisation de la solution de monomère
d) évacuation par lavage et dissolution du moulage de matrice.

2. Procédé selon la revendication 1, **caractérisé en ce qu'**une utilisation est faite d'un moulage de matrice qui a été modifié avec des molécules de gabarit.

3. Procédé selon l'une des revendications 1 ou 2, **caractérisé en ce que** de l'acide fluorhydrique aqueux est utilisé pour évacuer par lavage le moulage de matrice.

4. Moulage organique polymérique qui peut être produit par le procédé correspondant à l'une des revendications 1 à 3.

5. Moulage organique polymérique selon la revendication 4, **caractérisé en ce que** la surface du moulage présente des effecteurs de séparation.

6. Colonne de séparation chromatographique contenant un moulage selon l'une des revendications 4 ou 5.

7. Utilisation d'un moulage selon l'une des revendications 4 ou 5 dans une séparation chromatographique d'au moins deux substances.
